# EUROPÄISCHE PATENTSCHRIFT

(11) **EP 1 438 460 B1**
(45) Veröffentlichungstag und Bekanntmachung des Hinweises auf die Patenterteilung: **20.02.2008**
(21) Anmeldenummer: 02782847.4
(22) Anmeldetag: 07.10.2002
(51) Int. Cl.: E01C 21/00

(54) **ZERKLEINERUNGSMASCHINE**
COMMINUTION MACHINE
BROYEUSE

(30) Priorität: 05.10.2001 DE 20116343 U
(43) Veröffentlichungstag der Anmeldung: 21.07.2004
(73) Patentinhaber: FAE Group S.p.A., 38013 Fondo TN (IT)
(72) Erfinder: PIZZUTO, Gianfranco, I-38013 Fondo (IT)
(74) Vertreter: Zeitler, Giselher
(86) Internationale Anmeldenummer: PCT/EP2002/011228
(87) Internationale Veröffentlichungsnummer: WO 2003/031725

(56) Entgegenhaltungen:
- EP-A- 0 348 510
- DE-A- 3 101 216
- US-A- 3 732 023
- US-A- 3 750 758

## Beschreibung

Die Erfindung betrifft eine Steinfräse.

Steinfräsen dienen zum Bearbeiten von Böden, auf denen Steine verschiedener Größe liegen, wobei diese Steine möglichst stark zerkleinert werden sollen.

Eine bekannte Zerkleinerungsmaschine Art (DE 31 01 216 A) ist als sog. Randstreifenfertiger ausgestaltet, der mit einem Planierschild versehen ist. Dieses Planierschild besteht aus zwei plattenförmigen Teilen, die sich überlappen und relativ zueinander verschiebbar sind. Hierbei erstrecken sich diese plattenförmigen Teile des bekannten Planierschildes lediglich seitlich des bekannten Randstreifenfertigers, da nur eine seitliche Randstreifenfertigung bzw. -erneuerung vorgesehen ist.

Der bekannte Randstreifenfertiger weist keinerlei spezielle Einrichtungen zur Beeinflussung des Planierschildes auf. Dies ist auch deswegen nicht erforderlich, weil die Verdichtung des Bodens mittels gesonderter Walzen erfolgen soll.

Aus WO 0006829 ist außerdem eine Maschine bekannt, die über eine steinige Straße bewegbar ist, wobei die obere Straßenschicht mittels eines Rotors abgefräst und zerkleinert werden kann. Diese bekannte Maschine weist außer dem horizontal verlaufenden, mit Zähnen versehenen Rotor auch noch ein dem Rotor nachgeordnetes Planierschild sowie einen Rahmen auf, auf dem das Planierschild bis zum Boden absenkbar ist. Die Ausbildung dieser bekannten Maschine ist jedoch derart, dass hierdurch keine Feineinstellungen des Planierschildes, wie häufig bei unterschiedlich ausgebildeten Straßen erforderlich, möglich sind.

Der Erfindung liegt daher die Aufgabe zugrunde, eine Steinfräse zu schaffen, die bzgl. der Bodenbearbeitung verbessert und bzgl. des Anwendungsgebietes erweitert ist.

Diese Aufgabe wird erfindungsgemäß durch eine Steinfräse mit den im einzigen Patentanspruch enthaltenen Merkmalen gelöst.

Mit der erfindungsgemäß ausgestalteten Steinfräse wird u. a. der Vorteil erzielt, dass gleichzeitig mit der Bodenbearbeitung ein Einebnen bzw. Planieren erfolgt. Es ist somit möglich, gleichzeitig mittels der Zerkleinerungseinrichtung die Steine zu fräsen und mit dem Planierschild den bearbeiteten Boden zu planieren, so dass das bei der Zerkleinerung anfallende Material hinter der Zerkleinerungseinrichtung gleichmäßig und eben verteilt wird. Dadurch ist der Anwendungsbereich der erfindungsgemäßen Steinfräse beispielsweise auf eine schnelle und kostengünstige Herstellung von befahrbaren Wegen erweitert.

Die Betätigungseinrichtung, mittels der das Planierschild an der Steinfräse befestigt ist, ist vorteilhafterweise derart ausgestaltet, dass das Planierschild nicht nur bis auf den von der Steinfräse bearbeiteten Boden absenkbar ist, sondern auch gegen diesen von der Steinfräse bearbeiteten Boden mit einer vorbestimmten Kraft andrückbar ist.

Schließlich ist die Stelleinrichtung, die zwischen dem Planierschild und dessen Betätigungsvorrichtung angeordnet ist, außerdem derart ausgebildet, dass das Planierschild einerseits um eine in Bearbeitungsrichtung verlaufende, zum bearbeiteten Boden parallele Achse und andererseits um eine zum bearbeiteten Boden senkrechte Achse verschwenkbar ist und schließlich in beliebiger Stellung innerhalb des Verschwenkbereiches fixiert werden kann.

Die Erfindung wird im folgenden anhand der Zeichnung näher erläutert. Diese zeigt in:
- Fig. 1: eine bevorzugte Ausführungsform der erfindungsgemäßen Steinfräse in Seitenansicht und
- Fig. 2: ein Planierschild für die Steinfräse gemäß Fig. 1 in perspektivischer Ansicht.

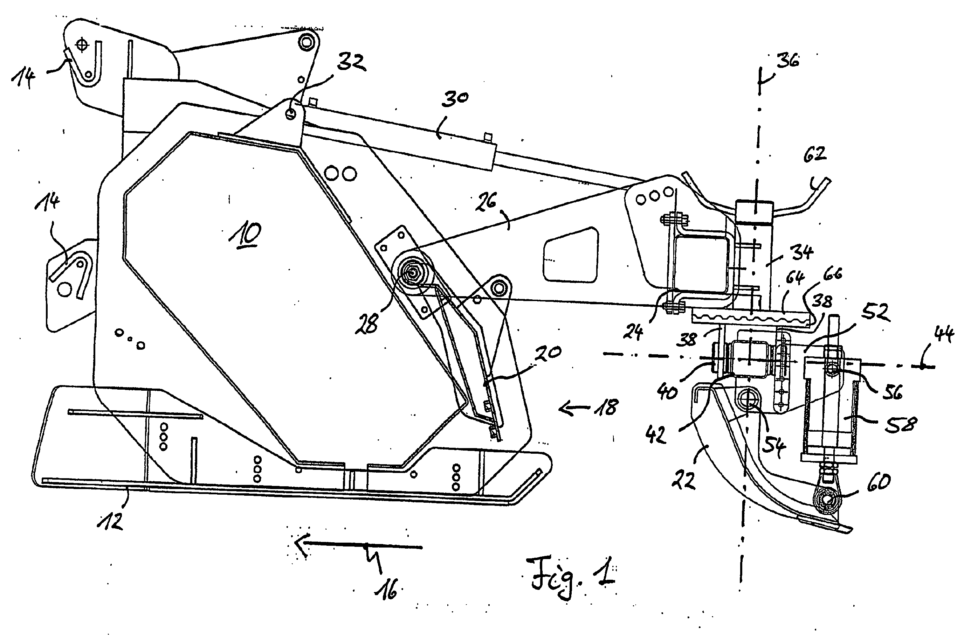

Die in Fig. 1 dargestellte, bevorzugte Ausführungsform einer erfindungsgemäßen Steinfräse umfasst eine nicht dargestellte Zerkleinerungseinrichtung in Form einer rotierenden Trommel, auf der Fräszähne befestigt sind. Die Trommel ist von einem Gehäuse 10 umschlossen, welches mittels Kufen 12 an einem zu bearbeitenden Boden aufliegt. Die Steinfräse wird über Halterungen 14 an einer nicht dargestellten Zugmaschine lösbar befestigt, und die Zugmaschine zieht die Steinfräse über den zu bearbeitenden Boden in eine Bearbeitungsrichtung 16, wobei das Gehäuse 10 mittels der Kufen 12 über den Boden gleitet. Innerhalb des Gehäuses 10 wirken die Fräszähne der rotierenden Trommel auf den Boden in gewünschter Weise ein, so dass die Steine im Boden zertrümmert werden. Hierbei ist die Trommel zweckmäßigerweise derart angeordnet, daß die Fräszähne eine vorbestimmte Tiefe in den Boden hinein arbeiten. An einem der Bearbeitungsrichtung 16 entgegengesetzten bzw. hinteren Ende 18 der Steinfräse tritt das zerkleinerte Material aus. Ein Abweiser 20 verhindert hierbei ein ungehindertes Herausfliegen von Materialbrocken aus dem Bearbeitungsbereich der Trommel.

In Bearbeitungsrichtung 16 gesehen hinter der Trommel, d.h. dem Ort der Bearbeitung durch die Steinfräse nachgeordnet, ist ein Planierschild 22 an der Steinfräse befestigt. Hierzu ist eine Halterungstraverse 24 vorgesehen, welche über Seitenplatten 26 an dem Gehäuse 10 an einem ersten Punkt 28 angelenkt ist. Ferner sind die Seitenplatten 26 über Hydraulikzylinder 30 an einem zweiten Punkt 32 angelenkt, der vom ersten Punkt 28 beabstandet ist. Hierdurch führt ein teleskopartiges Aus- bzw. Einfahren des Hydraulikzylinders 30 zu einem Heben bzw. Senken der Halterungstraverse 24. Es sind bevorzugt zwei Hydraulikzylinder 30 vorgesehen, welche eine Betätigungseinrichtung für das Planierschild 22 bzgl. der Funktion Heben und Senken bilden. Mittels entsprechendem Hydraulikdruck in den Hydraulikzylindern 30 in Richtung abgesenktes Planierschild 22 ist es ferner möglich, das Planierschild 22 gegen den bearbeiteten Boden zu drücken, so dass das Gehäuse 10 verlassendes Material von dem Planierschild 22 entsprechend eingeebnet, d.h. planiert wird.

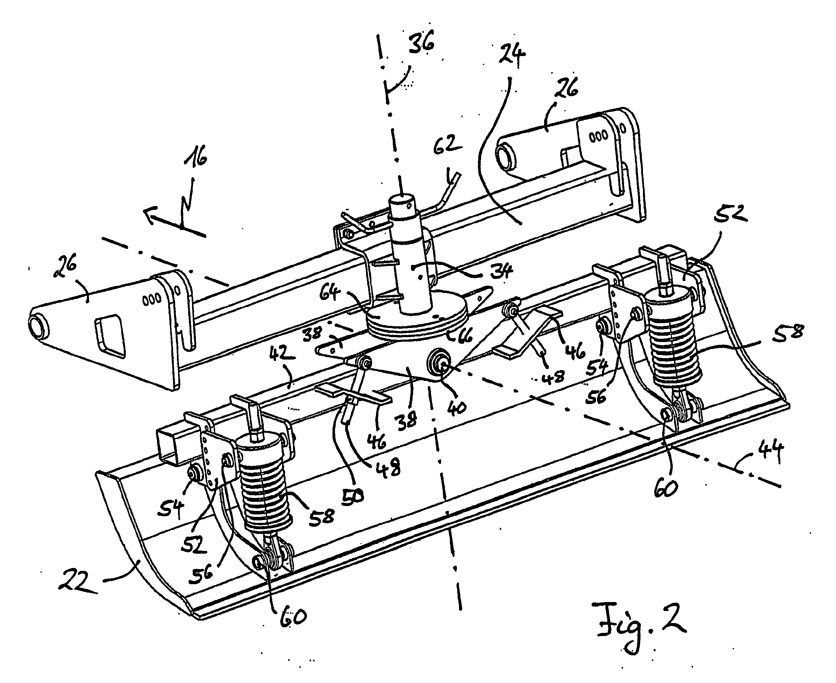

Fig. 2 veranschaulicht die weitere verschwenkbare Befestigung des Planierschildes 22 an der Halterungstraverse 24. An der Halterungstraverse 24 ist ein Schwenkgelenk 34 befestigt, welches ein Verschwenken des Planierschildes 22 um eine Achse 36 senkrecht zum bearbeiteten Boden innerhalb eines vorbestimmten Schwenkbereiches erlaubt. An dem Schwenkgelenk 34 sind zwei Halterungsplatten 38 angeordnet, zwischen denen über einen Schwenkpunkt 40 eine Befestigungstraverse 42 angelenkt ist. Hierdurch ist die Befestigungstraverse 42 und damit das Planierschild 22 um eine Achse 44 in Richtung der Bearbeitungsrichtung 16 innerhalb eines vorbestimmten Schwenkbereiches schwenkbar. An der Befestigungstraverse 42 sind Justierplatten 46 befestigt, in die an der Halterungsplatte 38 schwenkbar befestigte Gewindebolzen 48 greifen, wobei mittels Schraubenmuttern 50 auf den Gewindebolzen 48 eine Schwenkposition des Planierschildes um die Achse 44 fixierbar ist. Das Achsenpaar 36, 44 definiert eine Ebene parallel zur Bearbeitungsrichtung und senkrecht zum bearbeiteten Boden.

An der Befestigungstraverse 42 ist schließlich das Planierschild 22 befestigt. Hierbei sind entsprechende Seitenplatten 52 vorgesehen, wobei an einem Schwenkpunkt 54 das Planierschild 22 direkt mit einer Seitenplatte 52 verbunden ist und an einem weiteren Schwenkpunkt 56 das Planierschild 22 über einen Federdämpfer 58 mit einem vom Schwenkpunkt 54 beabstandeten Schwenkpunkt 60 am Planierschild 22 verbunden ist. Der Schwenkpunkt 60 ist an einem am Boden aufliegenden Ende des Planierschildes 22 angeordnet, so daß der Federdämpfer 58 das Planierschild 22 federnd gegen den zu planierenden Boden drückt.

Zum Verschwenken des Planierschildes 22 um die Achse 36 wird über ein Handrad 62 eine Verschraubung für zwei ineinander greifende Zahnplatten 64, 66 gelöst, so dass diese Zahnplatten 64, 66 außer Eingriff kommen. Nach Einjustierung der gewünschten Schwenkstellung um die Achse 36 wird die Verschraubung wieder festgezogen, so dass die Zahnplatten 64, 66 wieder in Eingriff kommen und diese Schwenkstellung fixieren. Durch eine entsprechende Schwenkstellung des Planierschildes 22 um die Achse 36 wird sichergestellt, dass das zerkleinerte Material hinter dem Gehäuse 10 gleichmäßig verteilt und überschüssiges Material zur Seite wegtransportiert wird.

Zum Verschwenken des Planierschildes 22 um die Achse 44 werden die Positionen der Schraubenmuttern 50 auf den Gewindebolzen 48 entsprechend durch Schrauben verändert. Durch ein Zusammenwirken der Schraubenmuttern 50 mit den Justierplatten 46 verkippt das Planierschild 22 in entsprechender Weise. Durch das Verkippen des Planierschildes 22 aus der Ebene des bearbeiteten Bodens heraus ist es möglich, einen seitlich abschüssigen Weg zu planieren, von dem Regenwasser in gewünschter Weise schnell abläuft.

## Patentansprüche

1. Steinfräse, die über einen zu bearbeitenden Boden in eine Bearbeitungsrichtung (16) bewegbar ist, mit
a) einer Zerkleinerungseinrichtung, insbesondere einer rotierenden Walze,
b) einem Planierschild (22), das an der Steinfräse, in Bearbeitungsrichtung (16) der Zerkleinerungseinrichtung nachgeordnet, vorgesehen ist,
c) einer Betätigungseinrichtung (30, 26, 24), mittels der das Planierschild (22) an der Steinfräse befestigt und bis auf den von der Steinfräse bearbeiteten Boden absenkbar sowie gegen diesen von der Steinfräse bearbeiteten Boden mit einer vorbestimmten Kraft andrückbar ist,
wobei die Betätigungseinrichtung eine Halterungstraverse (24) aufweist, die über Seitenplatten (26) an einem ersten Punkt (28) des Gehäuses (10) der Zerkleinerungseinrichtung angelenkt und über Hydraulikzylinder (30), die an einem zum ersten Anlenkpunkt (28) beabstandeten zweiten Punkt (32) angelenkt sind, heb- bzw. senkbar ist, und
d) mit einer Stelleinrichtung (38, 40, 46, 38, 50; 34, 62, 64, 66), mittels der das Planierschild (22) an der Steinfräse befestigt und mittels der das Planierschild (22) einerseits um eine in Bearbeitungsrichtung (16) verlaufende, zum bearbeiteten Boden parallele Achse (44) sowie andererseits um eine zum bearbeiteten Boden senkrechte Achse (36) verschwenkbar und in beliebiger Stellung innerhalb des Verschwenkbereiches fixierbar ist,
wobei die Stelleinrichtung ein an der Halterungstraverse (24) befestigtes Schwenkgelenk (34) zum Verschwenken des Planierschildes (22) um die zum bearbeiteten Boden senkrechte Achse (36) aufweist und außerdem zwei Halterungsplatten (38) besitzt, zwischen denen über einen Schwenkpunkt (40) eine das Planierschild (22) tragende Befestigungstraverse (42) zum Verschwenken des Planierschildes (22) um die zum bearbeiteten Boden parallele Achse (44) angelenkt ist.

## Claims

1. Stone crusher which is movable in a direction of working (16) over ground to be worked, comprising
a) a milling device, in particular a rotating roller,
b) a flattening blade (22) which is provided on the stone crusher following the milling device in the direction of working (16),
c) an actuating device (30, 26, 24) by means of which the flattening blade (22) is attached to the stone crusher and can be lowered to the ground worked by the stone crusher and can be pressed with a predetermined force onto the ground worked by the stone crusher,
wherein the actuating device has a holding crossbeam (24) which is articulated, by means of side plates (26), at a first point (28) of the housing (10) of the milling device and can be raised and lowered via hydraulic cylinders (30) which are articulated at a second point (32) spaced apart from the first articulation point (28), and
d) an adjusting device (38, 40, 46, 38, 50; 34, 62, 64, 66) by means of which the flattening blade (22) is attached to the stone crusher and by means of which the flattening blade (22) is pivotable, on the one hand, about an axis (44) extending in the direction of working (16) and parallel to the ground to be worked and, on the other hand, about an axis (36) perpendicular to the ground to be worked and fixable in any desired position within the pivoting range,
wherein the adjusting device comprises a pivot joint (34) fastened to the holding crossbeam (24) for pivoting the flattening blade (22) about the axis (36) perpendicular to the ground to be worked and also two holding plates (38) between which a fastening crossbeam (42) carrying the flattening blade (22) is articulated via a pivot point (40) for pivoting the flattening blade (22) about the axis (44) parallel to the ground to be worked.

## Revendications

1. Fraise à pierre, déplaçable dans une direction de travail (16) au-dessus d'un sol à travailler, comprenant
a) un système de broyage, en particulier un cylindre en rotation,
b) un bouclier de planage (22) qui est prévu sur la fraise à pierre à la suite du système de broyage en direction de travail (16),
c) un système d'actionnement (30, 26, 24) au moyen duquel le bouclier de planage (22) est fixé sur la fraise à pierre et peut être abaissé jusque sur le sol travaillé par la fraise à la pierre, et d'être pressé contre le sol travaillé par la fraise à pierre avec une force prédéterminée,
dans laquelle le système d'actionnement comprend une traverse de maintien (24) qui est articulée via des plaques latérales (26) en un premier point (28) du boîtier (10) du système de broyage, et qui peut être levée et abaissée via des vérins hydrauliques (30), lesquels sont articulés en un second point (32) à distance du premier point d'articulation (28), et
d) un système de positionnement (38, 40, 46, 38, 50 ; 34, 62, 64, 66), au moyen duquel le bouclier de planage (22) est fixé sur la fraise à pierre et au moyen duquel le bouclier de planage (22) peut être basculé d'une part autour d'un axe (44) qui s'étend dans la direction de travail (16) et parallèle au sol à travailler, et d'autre part autour d'un axe (36) perpendiculaire au sol à travailler, et d'être fixé dans une position quelconque à l'intérieur de la plage de basculement,
dans lequel le système de positionnement comprend une articulation de basculement (34) fixée sur la traverse de maintien (24) pour faire basculer le bouclier de planage (22) autour de l'axe (36) perpendiculaire au sol à travailler, et possède en outre deux plaques de maintien (38) entre lesquelles une traverse de fixation qui porte le bouclier de planage (22) est articulée via un point de basculement (40) pour faire basculer le bouclier de planage (22) autour de l'axe (44) parallèle au sol à travailler.
